## Europäisches Patentamt

## European Patent Office

## Office européen des brevets

(11) Veröffentlichungsnummer: **0 124 859**

**B1**

(12) # EUROPÄISCHE PATENTSCHRIFT

(45) Veröffentlichungstag der Patentschrift:
**10.08.88**

(51) Int. Cl.⁴: **H 04 Q 11/04,** H 04 M 11/06

(21) Anmeldenummer: **84104899.4**

(22) Anmeldetag: **02.05.84**

(54) Schaltungsanordnung für den Teilnehmeranschluss in einem diensteintegrierenden Digitalnetz (ISDN).

(30) Priorität: **05.05.83 DE 3316492**

(43) Veröffentlichungstag der Anmeldung:
**14.11.84 Patentblatt 84/46**

(45) Bekanntmachung des Hinweises auf die Patenterteilung:
**10.08.88 Patentblatt 88/32**

(84) Benannte Vertragsstaaten:
**AT BE CH DE FR GB IT LI NL SE**

(56) Entgegenhaltungen:
**IEEE GLOBAL TELECOMMUNICATIONS CONFERENCE, GLOBECOM '82, 29. November - 2. Dezember 1982, Miami, US, Band 2, "Paper" D2.4, Seiten 757-761, IEEE, New York, US; R. PARODI u.a.: "D-channel protocol: role, requirements, level 2 implications"
INTERNATIONAL SWITCHING SYMPOSIUM, 21.- 25. September 1981, Montreal, Canada, "Paper" 41 C 1, Seiten 1-6; J.-P. BEHR u.a.: "Concentration techniques in a digital network with decentralized exchange"
IEEE GLOBAL TELECOMMUNICATIONS CONFERENCE, GLOBECOM '82, 29. November - 2. Dezember 1982, Miami, US, Band 2, "Paper" D2.3, Seiten 750-756, IEEE, New York, US; B.W. MOORE u.a.: "ISDN customer to network signalling D channel protocol level 1 aspects"
PROCEEDINGS 1982 INTERNATIONAL**

(73) Patentinhaber: **Siemens Aktiengesellschaft Berlin und München, Wittelsbacherplatz 2, D-8000 München 2 (DE)**

(72) Erfinder: **Fundneider, Oswald, Dipl.- Ing., Enzianstrasse 82, D-8039 Puchheim (DE)**

(56) Entgegenhaltungen: (Fortsetzung)
**SYMPOSIUM ON SUBSCRIBER LOOPS AND SERVICES, 20.-24. September 1982, Toronto, Canada, Seiten 66-70, IEEE, New York, US; K.W. WABER: "Considerations on customer access to the ISDN"
IEEE INTERNATIONAL CONFERENCE ON COMMUNICATIONS, 13.-17. Juni 1982, Philadelphia, US, Band 3, "Paper" 5C.1, Seiten 1-4, IEEE, New York, US; T. TAKEMURA u.a.: "A new channel protocol and inhouse network configuration"**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Neuere Entwicklungen der Telekommunikationstechnik zielen über ein digitalisiertes Fernsprechnetz auf ein diensteintegrierendes Digitalnetz (ISDN) ab, in welchem in einheitlichen Telekommunikationskanälen beispielsweise mit einer Bitrate von 64 kbit/s (je Übertragungsrichtung) außer Sprache auch Texte, Bilder und Daten übermittelt (übertragen und vermittelt) werden, wobei den Teilnehmern die Nutzung der verschiedenen Telekommunikationsdienste über einen einheitlichen Teilnehmeranschluß ermöglicht. wird, an den Endgeräte für Telefonie, Textkommunikation, Bildkommunikation und Datenkommunikation in vielfältigen Konfigurationen anschließbar sind.

Der ISDN-Teilnehmeranschluß muß dafür geeignete Grundeigenschaften, beispielsweise hinsichtlich der Bitrate, der Signalisierungsmöglichkeiten und der Reichweite, aufweisen.

In der internationalen Diskussion und bei Standardisierungsarbeiten bei CEPT und CCITT hat sich in diesem Zusammenhang insbesondere der sogenannte Basisanschluß (Basic Access) mit der Kanalstruktur B + B + D (je Übertragungsrichtung) herauskristallisiert, worin B ein 64-kbit/s-Kanal ist, der digital codierte Informationen unterschiedlicher Art wie Sprache, Text, Fax, Daten, simultan, von Verbindung zu Verbindung oder innerhalb einer Verbindung alternierend oder fest zugeordnet übertragen kann, und worin D ein (nicht weitervermittelter) 16-kbit/s-Kanal ist, in dem im Nachrichtenmultiplex mit Vorrang Signalisierungszeichen und darüber hinaus Telemetriesignale und langsame, paketorientierte Daten übertragen werden können; für den Teilnehmeranschluß werden eine ISDN-Leitungsschnittstelle, die sog. U-Schnittstelle (am Ende der Teilnehmeranschlußleitung), und, mit dieser über eine sog. Netzabschlußeinheit (Network Termination) für die Funktionen innerhalb der Schicht 1 (physikalische Ebene) und ggf. auch der Schichten 2 und 3 des ISO-Funktionsschichtenmodells verbunden, eine ISDN-Endgeräteschnittstelle, die sog. S-Schnittstelle, definiert. Dabei wird davon ausgegangen, daß die S-Schnittstelle mehrpunktfähig ist, d.h., daß durch Verzweigung an der S-Schnittstelle Mehrgerätekonfigurationen gebildet werden können, in denen eine Mehrzahl von ISDN-Terminals mit S-Schnittstelle in einer Bus-, Stern- oder auch Ringstruktur angeordnet ist (ZPF -(1982)9, 24...31; Fernmeldetechnik 22(1982)2, 67...69, und 23(1983)7, 6...8 und 9...14).

In einer S-Schnittstellen-Buskonfiguration können alle angeschlossenen Endgeräte (Terminals) unabhängig voneinander auf den D-Kanal (Signalisierungskanal) zugreifen, über den die Zuteilung eines B-Kanals von der Vermittlungseinrichtung bewirkt wird. Der konfliktfreie Zugriff auf den S-Bus wird dabei von den angeschlossenen Terminals im D-Kanal selbst geregelt, indem zunächst alle von den Endgeräten über den D-Kanal zur Netzabschlußeinheit gelangenden und von dort zur Vermittlungsstelle weiterzuübertragenden Bits gewissermaßen nach einer UND-Verknüpfung jeweils aller gleichzeitig auftretenden Bits in einem gesonderten D-Echo-Kanal über die S-Schnittstelle in der Weise zu den Endgeräten rückübertragen werden, daß 0-Bits gegenüber 1-Bits dominieren; wenn verschiedene Endgeräte gleichzeitig 0-Bits und 1-Bits im D-Kanal senden, wird im D-Echokanal also stets ein 0-Bit zurückgegeben, so daß ein Endgerät, daß ein 1-Bit ausgesendet hat, diese Abweichung erkennt und daraufhin seinen Zugriffsversuch abbricht.

In der Buskonfiguration ermöglicht die S-Schnittstelle einen Anschluß von bis zu 8 Endgeräten bei einer Buslänge von etwa 150 m; in einer Einzelgerätkonfiguration mit nur einem Endgerät bzw. in einer Sternkonfiguration, bei der jedes Endgerät über eine eigene Leitung an eine Netzabschlußeinheit angeschlossen ist, liegt die Reichweite bei etwa 1 km.

Soll eine Mehrzahl von einzelnen Endgeräten jeweils über eine eigene S-Schnittstelle an eine gemeinsame ISDN-Netzabschlußeinheit angeschlossen werden, so stellt sich das Problem, wie die einzelnen schnittstellenindividuellen D-Kanäle in der Netzabschlußeinheit mit dem über die Netzabschlußeinheit und Vermittlungsstelle verbindende Teilnehmeranschlußleitung verlaufenden gemeinsamen D-Kanal zusammengeführt werden sollen.

Hierzu kann, wie dies an anderer Stelle (EP-A-0 124 858) angegeben ist, eine Schaltungsanordnung für den Teilnehmeranschluß in einem diensteintegrierenden Digitalnetz, in dem mono- oder multifunktionale Endgeräte mit ggf. über eine Anpassungseinrichtung herbeigeführter S-Schnittstelle mit der einen ISDN-Basisanschluß bildenden Teilnehmeranschlußleitung über eine Netzabschlußeinheit verbunden sind, in der die von der Vermittlungsstelle gesteuert jeweils einem Endgerät zugeteilten, über die Teilnehmeranschlußleitung zwischen ISDN-Netzabschlußeinheit und Vermittlungsstelle verlaufenden B-Kanäle zusammen mit dem gemeinsamen D-Kanal im Multiplex zusammengefaßt bzw. aus dem Multiplex aufgefächert werden, in der Weise ausgebildet sein, daß bei Anschluß einer Mehrzahl von einzelnen Engeräten jeweils über eine eigene ISDN-S-Schnittstelle und/oder von jeweils eine Mehrzahl von Endgeräten zusammenfassenden ISDN-S-Schnittstellen-Bussen an einer gemeinsamen ISDN-Netzabschlußeinheit in der Netzabschlußeinheit die einzelendgeräte- bzw. busindividuellen D-Kanäle der zur Vermittlungsstelle weisenden Übertragungsrichtung zu dem zur Vermittlungsstelle weiterführenden gemeinsamen D-Kanal über eine eine UND-Verknüpfung bewirkende Einrichtung geführt sind, deren Ausgangssignal außerdem in einem D-Echokanal über die einzelendgeräte- bzw. busindividuellen S-Schnittstellen in der entgegengesetzten Übertragungsrichtung zu den Teilnehmern rückgeführt wird.

Zur Lösung des Problems, wie die einzelnen schnittstellenindividuellen D-Kanäle in der Netzabschlußeinheit mit dem zur Vermittlungssteuerung verlaufenden gemeinsamen D-Kanal zusammengeführt werden sollen, zeigt demgegenüber die Erfindung einen ebenso vorteilhaften Weg, der zugleich auch zu dem weiteren Ziel einer Internverkehrsmöglichkeit zwischen den an unterschiedliche S-Anschlüsse der Netzabschlußeinheit angeschlossenen Endgeräten führt.

Die Erfindung betrifft eine Schaltungsanordnung für den Teilnehmeranschluß in einem diensteintegrierenden Digitalnetz, in dem mono- oder multifunktionale Endgeräte mit ggf. über eine Anpassungseinrichtung herbeigeführter S-Schnittstelle mit der einen ISDN-Basisanschluß bildenden Teilnehmeranschlußleitung über eine Netzabschlußeinheit verbunden sind, in der die von der Vermittlungssteuerung gesteuert jeweils einem Endgerät zugeteilten, über die Teilnehmeranschlußleitung zwischen ISDN-Netzabschlußeinheit und Vermittlungsstelle verlaufenden B-Kanäle zusammen mit dem gemeinsamen D-Kanal im Multiplex zusammengefaßt bzw. aus dem Multiplex aufgefächert werden; diese Schaltungsanordnung ist erfindungsgemäß dadurch gekennzeichnet, daß bei Anschluß einer Mehrzahl von einzelnen Endgeräten jeweils über eine eigene ISDN-Schnittstelle und/oder von jeweils eine Mehrzahl von Endgeräten zusammenfassenden ISDN-S-Schnittstellen-Bussen an einer gemeinsamen ISDN- · Netzabschlußeinheit in der Netzabschlußeinheit.

die B-Kanäle der einzelnen S-Anschlüsse individuell an ein Koppelfeld herangeführt werden, über das von der Vermittlungssteuerung gesteuert Verbindungen zwischen solchen B-Kanälen untereinander bzw. mit einem im Multiplex mit einem gemeinsamen D-Kanal über die Teilnehmeranschlußleitung zwischen ISDN-Netzabschlußeinheit und Vermittlungsstelle geführten B-Kanal herstellbar sind,

die einzelendgeräte- bzw. busindividuellen D-Kanäle der zur Vermittlungssteuerung weisenden Übertragungsrichtung zu dem zur Vermittlungssteuerung weiterführenden gemeinsamen D-Kanal über eine eine UND-Verknüpfung bewirkende Einrichtung geführt sind, deren Ausgang außerdem über einen gemeinsamen D-Echokanal mit den einzelendgeräte- bzw. busindividuellen D-Echokanälen der entgegengesetzten Übertragungsrichtung verbunden ist, und außerdem mit den einzelendgeräte- bzw. busindividuellen D-Kanälen der zur Vermittlungssteuerung weisenden Übertragungsrichtung ein Identifizierer verbunden ist, der zusätzlich zu der im gemeinsamen D-Kanal übertragenen Signalisierung eine Information über die diese Signalisierung übertragende S-Schnittstelle abgibt.

Die Erfindung, die sich das oben umrissene Schicht-1-Zugangsprotokoll für den Zugriff auf einen S-Bus in abgewandelter Form für die Zusammenführung der D-Kanäle mehrerer individuell an die Netzabschlußeinheit herangeführter S-Schnittstellen mit dem gemeinsamen D-Kanal zunutze macht und die sowohl in Bezug auf S-Anschlüsse ein und desselben Teilnehmers als auch auf S-Anschlüsse unterschiedlicher Teilnehmer Anwendung finden kann, bringt zunächst den Vorteil einer wenig aufwendigen Realisierungsmöglichkeit für den jeweils individuellen Anschluß einer Mehrzahl von einzelnen Endgeräten jeweils über eine eigene ISDN-S-Schnittstelle an die gemeinsame ISDN-Netzabschlußeinheit mit sich, über die dabei zugleich auch Internverkehr zwischen diesen Endgeräten möglich ist. Darüber hinaus eröffnet die Erfindung aber auch den Weg zu einer größeren Flexibilität in der Konfiguration von ISDN-Mehrgeräteanschlüssen insofern, als die Erfindung zugleich mit einem solchen Anschluß endgeräteindividueller S-Schnittstellen oder auch alternativ dazu auch den Anschluß von jeweils eine Mehrzahl von Endgeräten zusammenfassenden ISDN-S-Schnittstellen-Bussen an einer gemeinsamen ISDN-Netzabschlußeinheit ermöglicht. In diesem Zusammehhang sei bemerkt, daß dem Merkmal eines solchen Anschlusses von jeweils eine Mehrzahl von Endgeräten zusammenfassenden ISDN-S-Schnittstellen-Bussen an einer gemeinsamen ISDN-Netzabschlußeinheit allein oder auch in Kombination mit dem Anschluß wenigstens eines einzelnen Endgerätes (jeweils) über eine eigene S-Schnittstelle unabhängig von der oben angegebenen Führung und Verbindung der D-Kanäle und ihrer Identifizierung auch selbständige Bedeutung zukommt.

In vorteilhafter Ausgestaltung der Erfindung kann ein damit dann nur wenig aufwendiger Identifizierer ein Register aufweisen, in dessen den D-Kanälen der einzelnen S-Anschlüsse zugeordneten Registerstellen die in den einzelnen D-Kanälen auftretenden Bits jeweils nur bei Auftreten eines O-Bits in mindestens einem D-Kanal eingelesen werden und das jeweils nach Beendigung einer Signalisierungsübertragung im gemeinsamen D-Kanal die diese Signalisierung übertragende S-Schnittstelle anzeigt.

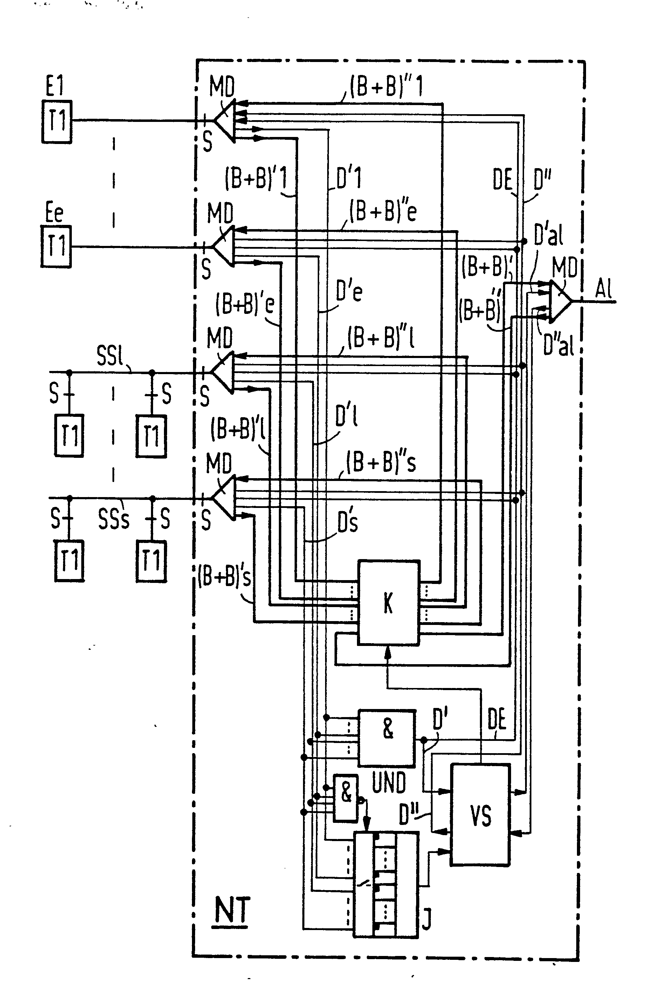

Anhand der Zeichnung sei die Erfindung noch näher erläutert.

Die Zeichnung zeigt schematisch in einem zum Verständnis der Erfindung erforderlichen Umfange eine ISDN-S-Schnittstellen S aufweisende ISDN-Netzabschlußeinheit (Network Termination) NT, an deren ISDN-S-Schnittstellen S sowohl Endgeräte E1...Ee jeweils individuell angeschlossen sind als auch ISDN-S-Schnittstellen-Busse SS1...SSs angeschlossen sind, die jeweils eine Mehrzahl von Endgeräten zusammenfassen. Für die einzelnen Endgeräte ist in der Zeichnung angedeutet, daß sie die sog. ISDN-T1-Funktionen realisieren und damit die ISDN-S-Schnittstellenbedingungen erfüllen; abweichend davon ist es aber auch möglich, daß das eigentliche Endgerät auch Funktionen umfaßt, die nicht diesen Bedingungen genügen, wobei dann dem Endgerät noch eine entsprechende Adaptereinrichtung zuzuordnen ist, die den funktionellen Zugang zum ISDN sicherstellt. Die S-Schnittstellen S der ISDN-Netzabschlußeinheit NT bilden damit jeweils einen ISDN-Basisanschluß (Basic Access) mit der Kanalstruktur B + B + D je Übertragungsrichtung, wobei die einzelnen Kanäle übertragungsrichtungsgetrennt jeweils zeitlich gebündelt sind. Über eine Teilnehmeranschlußleitung A1 ist die Netzabschlußeinheit NT an eine in der Zeichnung nicht mehr dargestellte Vermittlungsstelle angeschlossen.

In der Zeichnung ist angedeutet, daß in der Netzabschlußeinheit NT die jeweils beiden einzelendgeräte- bzw. busindividuellen B-Kanäle (B + B)'1, (B + B)''1;....; (B + B)'e, (B + B)''e; (B + B)'l, (B + B)''l;...;(B + B)'s, (B + B)''s; jeder Übertragungsrichtung über einen Multiplexer/Demultiplexer MD individuell an ein räumlich und ggf. auch zeitlich vermittelndes Koppelfeld K herangeführt sind; über dieses Koppelfeld K sind, von der Vermittlungssteuerung VS steuerbar, Verbindungen zwischen solchen B-Kanälen (B + B)'1,..., (B + B)''s untereinander bzw. zwischen solchen B-Kanälen und den im Multiplex mit einem gemeinsamen D-Kanal D'al bzw. D''al über die Teilnehmeranschlußleitung Al zwischen ISDN-Netzabschlußeinheit NT und Vermittlungsstelle geführten B-Kanälen (B + B)' bzw. (B + B)'' herstellbar. Dies kann in einer Weise vor sich gehen, wie dies in der Vermittlungstechnik für die Verbindungsdurchschaltung prinzipiell bekannt ist, so daß sich nähere Erläuterungen hier erübrigen, zumal dies zum weiteren Verständnis der Erfindung auch nicht erforderlich ist.

Die einzelendgeräte- bzw. busindividiuellen D-Kanäle D'1, ...,D'e, D'l,...,D's der zur Vermittlungsstelle weisenden Übertragungsrichtung sind zu dem zur Vermittlungssteuerung weiterführenden gemeinsamen D-Kanal D' über eine eine UND-Verknüpfung bewirkende Einrichtung UND geführt; in der umgekehrten Übertragungsrichtung ist der gemeinsame D-Kanal D'' unmittelbar auf die S-schnittstellenindividuellen D-Kanäle aufgefächert. Mit den einzelendgeräte- bzw. busindividuellen S-Schnittstellen ist in der zuletzt betrachteten Übertragungsrichtung außerdem der Ausgang der die UND-Verknüpfung bewirkenden Einrichtung UND über einen gemeinsamen D-Echokanal DE verbunden, wobei in der Zeichnung angedeutet ist, daß die Bündelung von D-Echokanal und D-Kanal in dem der jeweiligen S-Schnittstelle zugehörigen Multiplexer/Demultiplexer MD vor sich gehen kann.

Damit wird erreicht, daß in der Leitungsabschlußeinheit NT die über deren einzelne S-Anschlüsse in den einzelnen D-Kanälen empfangenen Bits jeweils in einer UND-Funktion verknüpft werden und das jeweilige Verknüpfungsergebnis im D-Echokanal an alle S-Schnittstellen der Leitungsabschlußeinheit NT und weiter zu den dort angeschlossenen Endgeräten zurückgelangt; unter Ausnutzung der eingangs umrissenen Schicht-1-Zugangs-protokoll-Funktion der Endgeräte wird damit ein konfliktfreier Zugriff der individuell bzw. über einen S-Bus SS an eine S-Schnittstelle der Netzabschlußeinheit NT angeschlossenen Engeräte zum gemeinsamen D-Kanal D' geregelt: Bevor sie zu senden beginnen, prüfen die Endgeräte, ob der gemeinsame D-Kanal frei ist; kennzeichnend dafür ist der Empfang einer vorgegebenen Mindestanzahl aufeinanderfolgender 1-Bits im D-Echokanal. Sobald dann bei einem gleichzeitigen Zugriffsversuch mehrere Endgeräte diese voneinander abweichend 0-Bits und 1-Bits im individuellen D-Kanal D'1,..., D's senden, wird im D-Echokanal DE stets ein 0-Bit zurückgegeben, so daß ein Endgerät, das ein 1-Bit ausgesendet hat, diese Abweichung zu erkennen und daraufhin seinen Zugriffsversuch abzubrechen vermag.

Die oben erwähnte Steuerung des Koppelfeldes K durch die Vermittlungssteuerung VS setzt voraus, daß die Vermittlungssteurung zunächst einmal weiß, von welchem S-schnittstellenindividuellen Endgerät E1...En bzw. von welchem S-Schnittstellen-Bus SS1...SSs der Verbindungsaufbau überhaupt ausgeht; allgemeiner gesprochen muß die Vermittlungssteuerung wissen, woher eine bei ihr im gemeinsamen D-Kanal D' ankommende Information stammt. Hierzu ist in der in der Zeichnung skizzierten Leitungsabschlußeinrichtung NT ein Identifizierer J vorgesehen, der eingangsseitig mit den einzelendgeräte- bzw. busindividuellen D-Kanälen D'1...D'e, D'l,...,D's der zur Vermittlungssteuerung VS weisenden Übertragungsrichtung verbunden ist; dieser Identifizierer J gibt jeweils zusätzlich zu der im gemeinsamen D-Kanal D' übertragenen Signalisierung eine Information über die diese Signalisierung übertragende S-Schnittstelle S ab. In der Zeichnung ist dazu angedeutet, daß der Identifizierer J ein Register aufweist, in dessen den D-Kanälen D'1...D's der einzelnen S-Schnittstellen S zugeordnete Registerstellen die in den einzelnen D-Kanälen auftretenden Bits unter dem Steuereinfluß eines NAND-Gliedes jeweils nur bei Auftreten eines 0-Bits in mindestens einem der D-Kanäle D'1,...,D's eingelesen werden; jeweils nach Beendigung einer Signalisierungsübertragung im gemeinsamen D-Kanal D' zeigt dann das Register diejenige S-Schnittstelle S, von der her die übertragene Signalisierung gekommen ist: Es ist diejenige S-Schnittstelle, deren zugeordnete Registerstelle als einzige ein 0-Bit enthält.

Abschließend sei zunächst noch bemerkt, daß die vorstehend erläuterte, eine Konzentration von S-Anschlüssen beliebiger Art ermöglichende Erfindung sowohl für Teilnehmer einer Nebenstellenanlage als auch für an ein öffentliches Telekommunikationsnetz angeschlossene Teilnehmer Anwendung finden kann.

Es ist auch möglich, daß in Abweichung von der zeichnerischen Darstellung die Vermittlungssteuerung nicht unmittelbar der Netzabschlußeinheit NT zugeordnet ist, wie dies für eine Nebenstellenanlage typisch wäre, sondern daß die Vermittlungssteuerung durch die Vermittlungssteuerung einer mit der Netzabschlußeinheit NT über die Anschlußleitung A1 verbundenen Vermittlungsstelle gegeben ist. In diesem Falle, in dem das in der Zeichnung dargestellte Koppelfeld K gewissermaßen ein über die Anschlußleitung A1 gesteuertes vorgezogenes Koppelfeld einer solchen (in der Zeichnung nicht mehr dargestellten) Vermittlungsstelle bilden würde, würden in Abweichung von der zeichnerischen Darstellung die gemeinsamen D-Kanäle D' und D'' direkt in die gemeinsamen D-Kanäle D'al bzw. D''al übergehen, mit deren letzterem dann außerdem auch der Ausgangskanal des Identifizierers gebündelt würde.

Schließlich sei auch noch besonders bemerkt, daß statt eigentlicher Endgeräte auch weitervermittelnde, konzentrierende oder multiplexende Einrichtungen an die S-Schnittstellen der ISDN-Netzabschlußeinheit NT angeschlossen sein können.

## Patentansprüche

1. Schaltungsanordnung für den Teilnehmeranschluß in einem diensteintegrierenden Digitalnetz (ISDN), in dem mono- oder multifunktionale Endgeräte (T1) mit ggf. über eine Anpassungseinrichtung herbeigeführter S-Schnittstelle mit der einen ISDN-Basisanschluß bildenden Teilnehmeranschlußleitung (A1) über eine Netzabschlußeinheit (NT) verbunden sind, in der die von der Vermittlungssteuerung gesteuert jeweils einem Endgerät (T1) zugeteilten, über die Teilnehmeranschlußleitung (A1) zwischen ISDN-Netzabschlußeinheit (NT) und Vermittlungsstelle verlaufenden B-Kanäle (B) zusammen mit dem gemeinsamen D-Kanal (D) im Multiplex zusammengefaßt bzw. aus dem Multiplex aufgefächert werden,

dadurch gekennzeichnet, daß bei Anschluß einer Mehrzahl von einzelnen Endgeräten (T1) jeweils über eine eigene ISDN-S-Schnittstelle (S) und/oder von jeweils eine Mehrzahl von Endgeräten (T1) zusammenfassenden ISDN-S-Schnittstellen-Bussen (SS) an einer gemeinsamen ISDN-Netzabschlußeinheit (NT) in der Netzabschlußeinheit (NT),

die B-Kanäle (B) der einzelnen S-Anschlüsse (S) individuell an ein Koppelfeld (K) herangeführt werden, über das von der Vermittlungssteuerung (VS) gesteuert Verbindungen zwischen solchen B-Kanälen (B) untereinander bzw. mit einem im Multiplex mit einem gemeinsamen D-Kanal (Dal) über die Teilnehmeranschlußleitung (Al) zwischen ISDN-Netzabschlußeinheit (NT) und Vermittlungsstelle geführten B-Kanal herstellbar sind,

die einzelendgeräte- bzw. busindividuellen D-Kanäle (D') der zur Vermittlungssteuerung (VS) weisenden Übertragungsrichtung zu dem zur Vermittlungssteuerung (VS) weiterführenden gemeinsamen D-Kanal (D') über eine eine UND-Verknüpfung bewirkende Einrichtung (UND) geführt sind, deren Ausgang außerdem über einen gemeinsamen D-Echokanal (DE) mit einzelendgeräte- bzw. busindividuellen D-Echokanälen (D') der entgegengesetzten Übertragungsrichtung verbunden ist,

und außerdem mit den einzelendgeräte- bzw. busindividuellen D-Kanälen (D') der zur Vermittlungssteuerung (VS) weisenden Übertragungsrichtung ein Identifizierer (J) verbunden ist, der zusätzlich zu der im gemeinsamen D-Kanal (D') übertragenen Signalisierung eine Information über die diese Signalisierung übertragende S-Schnittstelle (S) abgibt.

2. Schaltungsanordnung nach Anspruch 1, dadurch gekennzeichnet, daß der Identifizierer (J) ein Register aufweist, in dessen den D-Kanälen der einzelnen S-Anschlüsse zugeordneten Registerstellen die in den einzelnen D-Kanälen (D') auftretenden Bits jeweils nur bei Auftreten eines 0-Bits in mindestens einem D-Kanal (D') eingelesen werden und das jeweils nach Beendigung einer Signalisierungsübertragung im gemeinsamen D-Kanal (D') die diese Signalisierung übertragende S-Schnittstelle (S) anzeigt.

3. Schaltungsanordnung nach Anspruch 1 oder 2, dadurch gekennzeichnet, daß die Vermittlungssteuerung (VS) unmittelbar der Netzabschlußeinheit (NT) zugeordnet ist.

4. Schaltungsanordnung nach Anspruch 1 oder 2, dadurch gekennzeichnet, daß die Vermittlungssteuerung mit der Netzabschlußeinheit (NT) über die Teilnehmeranschlußleitung (A1) verbunden ist.

## Claims

1. A circuit arrangement for connecting subscribers in a service-integrating digital network (ISDN) in which mono-functional or multi-functional terminal devices (T1), with an S-interface which possibly leads through a matching device, are connected to the subscriber line (A1), which forms an ISDN-base terminal, via a network termination unit (NT) in which the B-channels (B) which, under the control of the switching control unit, are each assigned to a terminal device (T1) and extend along the subscriber line (A1) between the ISDN network termination unit (NT) and the exchange, are multiplexed and demultiplexed respectively with the common D-channel (D),

characterised in that when a plurality of individual terminal devices (T1) are each connected via a separate ISDN-S-interface (S) and/or when ISDN-S-interface buses (SS), which in each case combine a plurality of terminal devices (T1) are connected to a common ISDN-network termination unit (NT) in the network termination unit (NT), the B-channels (B) of the individual S-terminals (S) lead individually to a switching network (K) via which, under the control of the switching control unit (VS), connections can be established between such B-channels (B) one with another and with a B-channel which, in multiplex with a common D-channel (Dal), leads along the subscriber line (A1) between the ISDN-network termination unit (NT) and the exchange,

the D-channels (D') individually assigned to the individual terminal devices and buses, of the transmission direction pointing towards the switching control unit (VS) lead to the common D-channel (D'), which continues to the switching control unit (VS), via a device (UND) which effects an AND-logic link and whose output is also connected via common D-echo channel (DE) to the D-echo channels (D''), individually assigned to the individual terminal devices and buses, of the opposite transmission direction,

and the D-channels (D'), individually assigned to the individual terminal devices and buses, of the transmission direction pointing towards the switching control unit (VS) are also connected to an identifier (J) which, in addition to the signalling information transmitted in the common D-channel (D'), emits an item of information relating to the S-interface (S) which transmits this signalling information.

2. A circuit arrangement as claimed in claim 1, characterised in that the identifier (J) comprises a register in whose register positions, assigned to the D-channels of the individual S-terminals, the bits occurring in the individual D-channels (D') are input only when a 0-bit occurs in at least one D-channel (D'), and which, at the end of each transmission of signalling information in the common D-channel (D'), indicates the S-interface (S) which transmits this signalling information.

3. A circuit arrangement as claimed in claim 1 or claim 2, characterised in that the switching control unit (VS) is directly assigned to the network termination unit (NT).

4. A circuit arrangement as claimed in claim 1 or claim 2, characterised in that the switching control unit is connected to the network termination unit (NT) via the subscriber line (A1).

## Revendications

1. Montage pour le raccordement d'abonnés dans un réseau numérique à intégration de services (RNIS), dans lequel des appareils terminaux (T1) assumant une ou plusieurs fonctions et comportant une interface S établie éventuellement au moyen d'un dispositif d'adaptation, sont reliés à une ligne d'abonné (A1) qui constitue l'accès de base dans le système RNIS, par l'intermédiaire d'une unité (NT) de terminaison du réseau, dans laquelle des canaux B (B), qui sont affectés à des appareils terminaux respectifs (T1), sous la commande du dispositif de commande de commutation. et s'étendent entre l'unité ( NT) de terminaison du réseau (RNIS) et un central, en empruntant la ligne d'abonné (A1), sont rassemblés, conjointement avec un canal D (D) commun, selon le système multiplex et peuvent être extraits de ce système multiplex, caractérisé par le fait que, dans le cas du raccordement d'une pluralité d'appareils terminaux individuels (T1) respectivement par l'intermédiaire d'une interface S (S) propre du réseau RNIS et/ou de bus (SS) d'interfaces S du réseau RNIS, regroupant respectivement une multiplicité d'appareils terminaux (T1), à une unité commune (NT) de terminaison du réseau RNIS, dans l'unité (NT) de terminaison du réseau les canaux B (B) des différents accès S (S) sont raccordés individuellement à un champ de couplage (K) par l'intermédiaire duquel, sous la commande du dispositif de commande de commutation (VS), des liaisons peuvent être établies entre de tels canaux B (B) ou avec un canal B empruntant, ainsi qu'un canal D commun (Dal), lors du multiplexage, la ligne d'abonné (A1) entre l'unité (NT) de terminaison du réseau RNIS et le central,

les canaux D (D'), prévus individuellement pour chaque appareil terminal et pour chaque bus, du dispositif de transmission, qui réalise une transmission vers le dispositif de commande de commutation (VS), sont raccordés au canal commun D (D') et réalisent la retransmission en direction du dispositif de commande de commutation (VS), par l'intermédiaire d'un dispositif (UND) réalisant la combinaison logique ET et dont la sortie est reliée en outre, par l'intermédiaire d'un canal commun de transmission d'échos D (DE) à des canaux de transmission d'échos D (D''), prévus individuellement pour chaque appareil terminal et pour chaque bus, du dispositif de transmission dans le sens opposé, et,

en outre aux canaux D (D') prévus individuellement pour chaque appareil terminal et pour chaque bus, du dispositif de transmission réalisant une transmission en direction du dispositif de commande de commutation (VS), se trouve relié un dispositif d'identification (J) qui délivre, en plus de la signalisation transmise dans le canal D commun (D'), une information concernant l'interface S (S) transmettant cette signalisation.

2. Montage suivant la revendication 1, caractérisé par le fait que le dispositif d'identification (J) comporte un registre, que les bits apparaissant dans les différents canaux D (D') sont enregistrés dans les cases du registre associées aux canaux D des différents accès S, respectivement uniquement lors de l'apparition d'un bit "0" dans au moins un canal D (D'), et que, respectivement à la fin d'une transmission de signalisation dans le canal commun D (D'), le registre indique l'interface S (S) transmettant cette signalisation.

3. Montage suivant la revendication 1 ou 2, caractérisé par le fait que le dispositif de commande de commutation (VS) est associé directement à l'unité (NT) de terminaison du réseau.

4. Montage suivant la revendication 1 ou 2, caractérisé par le fait que le dispositif de commande de commutation est relié à l'unité (NT) de terminaison du réseau par l'intermédiaire de la ligne d'abonné (A1).